# EUROPÄISCHE PATENTSCHRIFT

(11) **EP 2 342 104 B1**
(45) Veröffentlichungstag und Bekanntmachung des Hinweises auf die Patenterteilung: **06.11.2013**
(21) Anmeldenummer: 09736822.9
(22) Anmeldetag: 29.09.2009
(51) Int. Cl.: B60T 7/04, B60T 7/10, B60T 11/04, B60T 17/22, F16B 1/02

(54) **FESTSTELLANORDNUNG FÜR EINE FESTSTELLBREMSE**
LOCKING ARRANGEMENT FOR A PARKING BRAKE
SYSTÈME DE BLOCAGE POUR UN FREIN DE STATIONNEMENT

(30) Priorität: 29.09.2008 DE 102008049333; 11.11.2008 DE 102008056752
(43) Veröffentlichungstag der Anmeldung: 13.07.2011
(73) Patentinhaber: Edscha Engineering GmbH, 42855 Remscheid (DE)
(72) Erfinder: GUTIERREZ FERNANDEZ, Jose, Manuel, E-39718 Sobremasas (ES)
(74) Vertreter: Sparing, Rolf Klaus
(86) Internationale Anmeldenummer: PCT/EP2009/007005
(87) Internationale Veröffentlichungsnummer: WO 2010/034521

(56) Entgegenhaltungen:
- EP-A1- 0 509 870
- EP-A1- 1 258 405
- DE-C1- 10 217 473
- JP-A- 9 267 729
- US-A- 4 872 368

## Beschreibung

Die Erfindung betrifft eine Feststellanordnung für eine Feststellbremse zur Verriegelung eines unter Spannung gehaltenen Bremsenteils nach dem Oberbegriff des Anspruchs 1.

Aus der Praxis sind Feststellanordnungen zur Verriegelung von unter Spannung gehaltenen Bremsenteilen bekannt, bei denen ein erstes Bremsenteil eine Verzahnung aufweist, in das eine an einem zweiten Bremsenteil vorgesehene Klinke mit einer Eingriffsnase eingreift und damit die beiden Teile in Drehbewegung gegeneinander sichert. Eine solche Feststellanordnung ist beispielsweise zum Verriegeln des Bremsbetätigungshebels an einem Hebelhalter vorgesehen, oder zum Festlegen einer Bremsseilnachstellvorrichtung, wenn der Bremsbetätigungshebel angehoben wird und der Freilauf der Nachstellvorrichtung blockiert werden soll.

Bei bekannten Feststellanordnungen besteht ein Problem darin, dass bei bestimmten Ablagewinkein eine zahnförmig ausgeformte Eingriffsnase derart mit einem Zahn der Verzahnung in Anlage gerät, dass die Haftreibung ausreicht, um eine metastabile Arretierung der mit der Eingriffsnase versehenen Klinke zu erreichen, die jedoch noch keine formschlüssige Eingriffsposition zwischen zwei Zahnflanken der Verzahnung darstellt. Diese metastabile Position, die auch als "Half-Locking" bezeichnet wird, kann im Falle von Erschütterung oder dergleichen überwunden werden, mit der möglichen Folge, dass die Eingriffsnase in die Vertiefung zwischen zwei benachbarte Zahnflanken einrückt und eine stabile Verriegelungsposition erreicht, es besteht jedoch die Gefahr, dass statt dessen die Eingriffsnase abgleitet und unter der Spannung des Bremsseils mit dem Bremsbetätigungshebel in die abgelegte Bremsposition abrutscht, wodurch die Feststellbremse nicht mehr gesichert ist. Eine metastabile Position wird insbesondere dann eingenommen, wenn die Tangenten an den miteinander in Kontakt gelangenden Bereichen der Eingriffsnase und des Zahns der Verzahnung in etwa parallel sind.

DE 102 12 673 A1 zeigt eine Feststellanordnung zur Verriegelung eines unter Spannung einer Feder gehaltenen, als Seilspannscheibe ausgebildeten und um eine Hauptachse verschwenkbaren Bremsenteils, bei dem an der Seilspannscheibe eine Verzahnung mit einer Mehrzahl benachbarter Zähne vorgesehen ist. Für den Eingriff in die Verzahnung der Seilspannscheibe ist eine um eine Klinkenanlenkung verschwenkbare Klinke an einem Bremsbetätigungshebel verschwenkbar angeordnet, die an einem Eingriffsende eine in Richtung auf die Verzahnung vorgespannte Eingriffsnase aus drei Zähnen aufweist, die derart ausgebildet ist, dass alle drei Zähne der Eingriffsnase in gleichmäßigem Abstand zueinander mit der Zahnteilung der Verzahnung übereinstimmen und vollständig in die Verzahnung eingreifen können. Hierbei greift, wenn die Klinke in die Verzahnung einrückt, zunächst ein erster Zahn der Klinke in die Verzahnung ein, und soll bei Anlage mit der Verzahnung die Klinke in eine Eingriffsposition verschwenken, in der alle Zähne der Eingriffsnase in die Verzahnung eingreifen. Nachteilig bei der bekannten Feststellanordnung ist zum einen das erforderliche Spiel in der Schwenkachse der Klinke, das erforderlich ist, um zunächst nur einen ersten Zahn einzurücken. Ferner besteht auf Grund der äquidistanten Zahnabstände die Gefahr, dass alle Zahnspitzen der Zähne der Eingriffsnase außerhalb der Vertiefungen der Verzahnung in Anlage gelangen, wodurch die Klinke abrutschen kann. Eine von der Eingriffsnase beabstandete Hilfsnase ist nicht gezeigt.

EP 1 258 405 A1 zeigt eine Festellanordnung gemäß dem Oberbegriff des Anspruchs 1, umfassend einen Bremsbetätigungshebel, ein feststehendes Teil mit einer Verzahnung mit einer Mehrzahl benachbarter Zähne, und eine in die Verzahnung eingreifende, dem feststehenden Teil gegenüberliegend an dem Bremsbetätigungshebel angelenkte, um einen Klinkenzapfen verschwenkbare erste Klinke. Ferner ist an der Feststellanordnung eine in die Verzahnung eingreifende, dem feststehenden Teil gegenüberliegend an dem Bremsbetätigungshebel angelenkte, um den Klinkenzapfen verschwenkbare zweite Klinke angeordnet. Die erste Klinke weist eine erste Eingriffsnase auf, die in die Verzahnung eingreift, wobei die erste Klinke relativ zu dem feststehenden Teil verschwenkbar ist. Ferner weist die erste Klinke ein geradliniges Langloch auf, welches Langloch um den Klinkenzapfen eine Anlenkung bildet, wobei eine Verschwenkung der ersten Klinke um den Klinkenzapfen und eine translatorische Bewegung der ersten Klinke entlang des Langlochs möglich ist. Die zweite Klinke weist mittig eine zweite Eingriffsnase und an einem der ersten Eingriffsnase entgegengesetzten Ende eine dritte Eingriffsnase auf, welche Eingriffsnasen in Eingriff mit der Verzahnung des feststehenden Teils gebracht werden können. Die zweite Klinke weist ein gekrümmtes Langloch auf, welches Langloch ebenfalls um den Klinkenzapfen angeordnet ist, so dass eine Verschwenkung um den Klinkenzapfen und eine Kippbewegung entlang des gekrümmten Langlochs möglich ist. Die erste Klinke ist in Richtung auf das feststehende Teil durch eine Feder vorgespannt, welche mit einem Ende an einem Abschnitt der ersten Klinke und mit einem anderen Ende in einem Loch an dem Bremsbetätigungshebel befestigt ist. Der Klinkenzapfen ist ebenfalls an dem Bremsbetätigungshebel befestigt, so dass die Klinke im wesentlichen einer Bewegung des Bremsbetätigungshebels folgt, wobei sich je nach translatorischer Lage der Klinke gegenüber dem Bremsbetätigungshebel die Kraftangriffsrichtung der Feder ändert. Die zweite Klinke wird an ihrem die dritte Eingriffsnase aufweisenden Ende durch eine schwenkbar befestigte Zugfeder in eine Richtung weg von der Verzahnung vorgespannt, wobei die Zugfeder anderenends an einem Stift schwenkbar an dem Bremsbetätigungshebel gehalten ist, so dass bei einem Anziehen des Bremsbetätigungshebels die zweite Klinke nicht in Eingriff mit der Verzahnung gelangt. Die erste Klinke und die zweite Klinke gelangen durch eine Auflagefläche der ersten Klinke und einen Vorsprung der zweiten Klinke bei einem "erweiterten" Anziehen des Bremsbetätigungshebels miteinander in Eingriff, so dass die von der Feder auf die erste Klinke übertragene, dann geänderte Vorspannung ebenfalls auf die zweite Klinke übertragen werden kann. Der Bremsbetätigungshebel ist an dem feststehenden Teil an einer hinteren, eine Hauptachse definierenden Schwenkachse angelenkt. Wird der Bremsbetätigungshebel betätigt, so schwenkt der Bremsbetätigungshebel und damit die erste Klinke und die zweite Klinke um die Verzahnung. Dabei schwenkt eine eine Mittelachse des Klinkenzapfens und die Hauptachse verbindende Ebene relativ zu den Klinken, wobei sich ein Angriffspunkt des Endes der Feder von einer Seite der Ebene auf eine untere Seite der Ebene verlagert und daher die Richtung der Vorspannung der ersten Klinke um die Klinkenanlenkung in eine erste Richtung ändert, so dass die zweite Eingriffsnase statt von der Verzahnung weggedrückt zu werden auf die Verzahnung hin gedrückt wird und mit dieser in Eingriff gelangt. Dabei wird der Anteil der Vorspannung der ersten Eingriffsnase in eine zweite Richtung der Verzahnung aufgehoben, so dass sich die Eingriffsnase von der Verzahnung in die erste Richtung löst.

EP 0 509 870 A1 zeigt in einem ersten Ausführungsbeispiel eine Feststellanordnung einer Handbremse, umfassend einen um eine Hauptachse verschwenkbaren Hebel, an welchen Hebel eine Klinke durch eine Klinkenanlenkung angelenkt ist, wobei die Klinke mit einer Eingriffsnase und einer Führungsnase mit einem geringen Reibungskoeffizienten in Eingriff mit einer Verzahnung bringbar ist. Bei einer Feststellbewegung des Hebels läuft die Führungsnase der Eingriffsnase voraus und beabstandet diese von der Verzahnung, da die Führungsnase an einem Zahnkamm der Verzahnung entlanggleitet, so dass ein einfaches Anziehen des Hebels ermöglicht ist. Wird die Bewegung gestoppt, so rasten beide Nasen und in die Verzahnung ein, wobei die Führungsnase vor der Eingriffsnase in Kontakt mit der Verzahnung ist.

EP 0 509 870 A1 zeigt in einem zweiten Ausführungsbeispiel eine abgewandelte Form der Führungsnase, wobei hier die Führungsnase an einem zwischen der Klinke und der Verzahnung angeordneten Schwenkhebel angeordnet ist. Der Schwenkhebel weist auf der der Führungsnase gegenüberliegenden und der Klinke zugewandten Seite einen Vorsprung auf, wobei während eines Anziehens des Bremsbetätigungshebels die Führungsnase einerseits entlang der Verzahnung gleitet und andererseits der Vorsprung die Klinke und damit die Eingriffsnase außer Eingriff mit der Verzahnung hält. Während der Bewegung beträgt der Abstand der Scheitel der Führungsnase und der Eingriffsnase ein nicht ganzzahliges Vielfaches der Zahnbreite eines der Zähne der Verzahnung. Wird die Bewegung gestoppt, so rasten beide Nasen selbstständig in die Verzahnung ein, wobei die Führungsnase vor der Eingriffsnase in Kontakt mit der Verzahnung ist, und wobei der Abstand dann ein ganzzahliges Vielfaches der Zahnbreite eines der Zähne beträgt.

DE 102 17 473 C1 zeigt eine Vorrichtung für eine Nachstellung einer Seilzugspannung eines Seilzugs, umfassend einen Hebel mit einer gegenüber dem Hebel drehbar an einem Verschwenkhebel um eine Drehachse gelagerten Verzahnscheibe mit einer Verzahnung. Die Verzahnscheibe ist um die Drehachse einerseits in eine Spannrichtung des Seilzugs durch den Seilzugs und andererseits durch eine entgegengesetzt zu der Spannrichtung des Seilzugs spannende Spiralfeder vorgespannt, wobei die Spiralfeder so ein Durchhängen des Seilzugs verhindert. Eine an dem Hebel vernietete Klinke greift mit einer Eingriffsnase in die Verzahnung ein, wenn der Hebel um eine feste Achse gegenüber dem Schwenkhebel verschwenkt. Bei einer Zahn-auf-Zahnstellung gelangt eine zu der Eingriffsnase fest angeordnete und an einem Ende der Klinke angeordnete Abgleitfläche in einen Eingriff mit der Verzahnung und drückt die Eingriffsnase in eine Lücke zwischen zwei Zähnen der Verzahnung, wobei die Verzahnscheibe gegenüber dem Hebel durch die Abgleitfläche gedreht wird. Eine Umfangsverzahnung an dem Hebel dient nur der Geräucherzeugung. Wird der Hebel verschwenkt, so gelangt die Eingriffsnase mit der Verzahnung in Eingriff und ein Anziehen einer Bremse durch weiteres Verschwenken des Hebels wird ermöglicht.

US 4 872 368 A zeigt eine Feststellanordnung für eine Fußbremse, umfassend eine Verzahnung, eine um eine Klinkenanlenkung verschwenkbare Klinke mit einer ersten Eingriffsnase und einer zweiten Eingriffsnase. Die beiden Eingriffsnasen können dabei alternierend in die Verzahnung eingreifen und so eine Feststellung der Klinke gegenüber der Verzahnung erreichen.

JP 09 267729 A zeigt in einem ersten Ausführungsbeispiel eine Fußfeststellbremsanordnung mit einer an einem Pedal angeordneten Verzahnung, einer Klinke mit einem Langloch, mit welchem Langloch die Klinke schwenkbar um einen Klinkenzapfen gelagert ist. Die Klinke ist im Wesentlichen dreieckig ausgebildet und weist an ihrem der Verzahnung zugewandten Ende eine erste Eingriffsnase und eine zweite Eingriffsnase auf, die jeweils einzeln in die Verzahnung eingreifen können. Die Klinke ist durch eine Schenkelfeder entweder in Richtung der ersten Eingriffsnase um den Klinkenzapfen oder in Richtung der zweiten Eingriffsnase um den Klinkenzapfen vorgespannt. Die Richung ist dabei abhängig von der Stellung des Pedals und der vorherigen Stellung der Klinke. Eine Verschwenkung der Klinke wird durch einen zwischem der Klinke und der Verzahnung angeordneten Anschlag begrenzt.

Es ist die Aufgabe der Erfindung, eine Feststellanordnung zur Verriegelung eines unter Spannung gehaltenenen Bremsenteils bzw. einer Feststellbremse anzugeben, die eine verbesserte Feststellung ermöglicht.

Diese Aufgabe wird erfindungsgemäß durch eine Feststellanordnung mit den Merkmalen des Anspruchs 1 bzw. eine Feststellbremse mit den Merkmalen des Anspruchs 14 gelöst.

Die erfindungsgemäße Feststellanordnung zur Verriegelung eines unter Spannung gehaltenen Bremsenteils weist an dem einen Bremsenteil eine Verzahnung mit einer Mehrzahl benachbarter Zähne auf, und an dem anderen Bremsenteil eine um eine Klinkenanlenkung verschwenkbare Klinke, die wenigstens eine Eingriffsnase aufweist, die an einem Eingriffsende der Klinke vorsteht und in Richtung auf die Verzahnung vorgespannt ist, so dass bei Verschwenkung die Eingriffsnase durch Eingreifen zwischen zwei benachbarte Zähne der Verzahnung ein Rückdrehen wirksam verhindern kann. Hierzu sind die Anlenkung und die Verzahnung relativ zueinander um eine Hauptachse verschwenkbar, wobei zweckmäßigerweise eines der beiden Bremsenteile zu der Hauptachse unverdrehbar ausgebildet ist. Der Klinke ist zusätzlich zu der Eingriffsnase eine Hilfsnase zugeordnet, die von der Eingriffsnase beabstandet angeordnet ist, wobei sichergestellt ist, dass bei Verschwenkung der Klinke in Richtung auf die Verzahnung zuerst die Hilfsnase in Anlage gelangt. Dadurch bildet die Hilfsnase eine Art Hilfslagerstelle, um die die Eingriffsnase ein Stück weit schwenken kann, so dass die Eingriffsnase definiert in einen Zwischenraum zwischen zwei Zähne der Verzahnung hineingeführt wird. Die Verzahnung kann als Zahnsegment ausgebildet sein.

Wenn gemäß einer besonders bevorzugten Ausgestaltung der Abstand der wirksamen Flächen der Eingriffsnase und der Hilfsnase, also im Falle der Ausgestaltung als Zähne deren Zahnkamm, um einen Wert zueinander beabstandet ist, der von einem ganzzahligen Vielfachen der Zahnbreite eines Zahns der Verzahnung verschieden ist, ist sichergestellt, dass die Eingriffsnase in eine stabile Position zwischen zwei Zähne der Verzahnung eingefügt wird. Dies geschieht nach folgendem Wirkprinzip: Ist der Hilfszahn in einer stabilen Position angeordnet, bewirkt die Verschwenkung um die durch den Hilfszahn in der Verzahnung gebildete Hilfslagerstelle ein sicheres und zuverlässiges Positionieren der Eingriffsnase zwischen zwei benachbarte Zähne der Verzahnung und damit ein zuverlässiges Festlegen. Befindet sich der Hilfszahn in einer metastabilen Eingriffsposition, stellt der nichtganzzahlige Abstand zu der Eingriffsnase sicher, dass die Eingriffsnase jedenfalls nicht in einen Bereich hineinverschwenkt wird, in dem die Eingriffsnase eine metastabile Position einnehmen würde. Damit gelangt die Eingriffsnase stets in eine stabile Position. Besonders bevorzugt wird zu dem ganzzahligen Zähneabstand ein Wert von ein Viertelzahn hinzugesetzt, um den Abstand zwischen Eingriffszahn und Hilfszahn zu bestimmen. Die metastabile Zone, die vermieden werden soll, macht meist nicht mehr als maximal 15 % einer Zahnteilung bzw. einer Zahnbreite aus, so dass sichergestellt ist, dass der Eingriffszahn und der Hilfszahn nicht gleichzeitig mit einer derartigen metastabilen Zone in Anlage gelangen.

Zweckmäßigerweise ist die Hilfsnase näher an einer die Klinkenanlenkung und die Hauptachse verbindenden Ebene angeordnet als die Eingriffsnase. Im Idealfall ist so gewährleistet, dass die die beiden Achsen, also Klinkenanlenkung und Hauptachse, verbindende Ebene bei der Ablagebewegung von dem eine Hilfslagerstelle bildenden Hilfszahn im Zuge der weiteren Ablage der Klinke durchstoßen wird, so dass die Kraft im Wesentlichen auf die Eingriffsnase wirkt und diese zuverlässig in die Verzahnung einrückt. Aufgrund der wirksamen Hebelverhältnisse ergibt sich jedoch in jedem Fall hierdurch, dass die auf die Eingriffsnase wirkende Kraft größer ist als diejenige, die auf die Hilfsnase einwirkt.

Zweckmäßigerweise ist die Hilfsnase um eine Mehrzahl von Zähnen von der Eingriffsnase beabstandet, und eilt der Eingriffsnase mit Bezug auf die Verzahnung in Anzugsrichtung voraus. Um eine wirksame Hilfslagerstelle zu schaffen, ist es hierbei zweckmäßig, wenn der Abstand von Eingriffsnase und Hilfsnase zumindest mehrere Zähne, also das mehrfache der Teilung bzw. Zahnbreite der Verzahnung ausmacht, vorzugsweise das zweifache, möglicherweise bis zu mehr als das fünffache und in der Regel nicht mehr als ca. sieben bis zehn Zähne aufweist; in der Regel hängt der Abstand auch von der gewählten Zahnteilung ab, wobei ein nicht ganzzahliger Abstand bevorzugt ist. Daraus ergibt sich, dass auch die Verzahnung bzw. das Zahnsegment entsprechend um diese Anzahl von Zähnen länger ausgebildet ist, als für die eigentliche Verriegelung erforderlich. In der Regel wird die Verzahnung ohnehin mit zusätzlichen Zähnen ausgestattet, um bei sich relaxierendem Bremsseil eine stärkere Spannung aufbringen zu können. Es ist aber möglich, den zusätzlichen Abschnitt auch außerhalb der Verzahnung in einem Anschlußsegment vorzusehen, da dieses nicht so stark beansprucht wird wie derjenige Teil des Zahnsegments, in den die Eingriffsnase eingreift. Konkret kann als geeigneter Abstand eine Zähnezahl ausgewählt werden, die einem Anzugswinkel von 2° entspricht, vergrößert oder verkleinert um Betrag kleiner 1, also z.B. ein Wert von 2,25 Zähnen bei einem Zahn je Winkelgrad, oder 4,25 Zähnen bei zwei Zähnen je Winkelgrad. Es kann aber auch ein Wert, der einem Anzugswinkel von 3°, 4° oder 5°, vergrößert oder verkleinert um einen Bruchteil kleiner 1, ausgewählt werden. Überraschend ist hierbei, dass auch bei recht kurzem Abstand ein geeignetes Moment erreicht wird. Wenn die Hilfsnase um einen Abstand von zwei Zahnbreiten von der Eingriffsnase beabstandet ist, ist zwischen der Eingriffsnase und der Hilfsnase eine Lücke entsprechend einer Zahnbreite vorgesehen. Vorzugsweise wird diese Lücke aber ein nicht ganzzahliges Vielfaches einer Zahnbreite ausmachen.

Die der Klinke zugeordnete Hilfsnase ist vorzugsweise an der Klinke selbst angeordnet, wobei wahlweise eine schwenkbewegliche Anordnung über ein Verbindungsgelenk oder eine einstückige Ausbildung mit der Klinke möglich ist. Insbesondere die einstückige Ausgestaltung hat den Vorteil, dass durch den bekannten Abstand zu der Eingriffsnase eine zuverlässige Eingriffskinematik erzielt werden kann, eine spezifische Lagerstelle nicht erforderlich ist und die Klinke einfach hergestellt werden kann.

Vorzugsweise ist die Hilfsnase schmaler ausgebildet als die Eingriffsnase, wobei die Eingriffsnase in der Regel so ausgebildet ist, dass diese satt zwischen zwei benachbarte Zähnen der Verzahnung eindringen kann. Ist nun der Abstand zu der Hilfsnase ein nicht ganzzahliges Vielfaches der Zahnbreite, führt dies bei sattem Eindringen der Eingriffsnase in die Verzahnung dazu, dass die Hilfsnase nicht vollständig in eine entsprechende Ausnehmung zwischen zwei anderen Zähnen der Verzahnung eindringen kann, sondern vielmehr aus dem Tiefpunkt des Tals zwischen zwei benachbarten Zähnen herausgerückt wird. Um zu verhindern, dass es hierbei zu einem Klemmen kommt, ist die Hilfsnase schmaler ausgebildet als die Eingriffsnase, wobei die Differenz ungefähr ein Viertel bis ein Halb der Maße der Eingriffsnase ausmacht. Es ist insbesondere alternativ möglich, die Eingriffsnase auch sehr viel dicker auszubilden, um zu verhindern, dass diese überhaupt in die Verzahnung eindringt, insbesondere auch als Kugel oder dergleichen, die zuverlässig und reproduzierbar von zwei Zahnspitzen der Verzahnung zentriert werden kann und so eine Hilfslagerstelle definieren kann.

Die Feststellklinke ist zweckmäßigerweise in Richtung auf die Verzahnung vorgespannt, wobei dies gemäß einer ersten Ausgestaltung durch eine die Feststellklinke beaufschlagende Feder, die nur zu diesem Zweck vorgesehen ist, erfolgen kann. Gemäß einer anderen Ausgestaltung kann die Feststellklinke auch als doppelarmiger Hebel ausgebildet sein, und die Vorspannung durch ein Federglied erfolgen, das entweder die von einem ersten der beiden Hebelarme gebildete Klinke gegen den anderen Hebelarm vorspannt, oder aber im Falle einer starren oder semistarren Ausgestaltung der beiden Hebelarme durch eine Feder, die den zweiten der beiden Hebelarme vorspannt, insbesondere zieht.

Vorzugsweise ist die Klinkenanlenkung mit Spiel ausgestattet, wodurch das Abrollen der Hilfsnase an der Verzahnung besonders begünstigt wird, und sichergestellt ist, dass es insbesondere in der metastabilen Auftreffsituation der Hilfsnase auf der Verzahnung nicht zu einem unbeabsichtigten Blockieren der Abrollbewegung um die Hilfsanlenkung kommt. Es ist möglich, das Spiel in der Art eines Langlochs oder einer ellipsenförmigen Augenbohrung in bestimmten Orientierungen besonders bevorzugt auszugestalten, wobei eine Geräuschentwicklung durch eine leicht deformierbare Buchse unterdrückt sein kann, es kann als Spiel jedoch die in dem Lager immanente Toleranz benutzt werden. Entsprechend kann auch die Augenbohrung einen definierten Spalt gegenüber dem eingesetzten Zapfen aufweisen, der vorzugsweise auf der der Hilfsnase gegenüberliegenden Seite vorgesehen ist.

Die Hilfsnase ist vorzugsweise zahnförmig ausgebildet, wodurch mit Ausnahme der prozentual gering wahrscheinlichen metastabilen Anlage an die Zahnflanke eines Zahns der Verzahnung ein zuverlässiges und reproduzierbares Eingreifen in die Verzahnung unter Bildung eines momentanen Formschlusses erfolgt. Es ist aber möglich, die Hilfsnase mit anderen Geometrien auszubilden, beispielsweise als Kugel oder in Kalottenform oder als kleines Zahnradsegment, welche die Abrollbewegung besonders begünstigen.

Zweckmäßigerweise ist die Hilfsnase näher an der Klinkenanlenkung angeordnet als die Eingriffsnase, wobei aufgrund der Klinkenbewegung, wenn diese über die Verzahnung gezogen wird, die Eingriffsnase weiter ausgerückt wird als die Hilfsnase, mit der Folge, dass die Hilfsnase im Wesentlichen unter Geräuschentwicklung über die Verzahnung rattert. Hierbei kann das charakteristische Rattergeräusch wie im Stand der Technik durch geteilte Klinken oder dergleichen reduziert werden, vorzugsweise aber auch dadurch, dass die Hilfsnase eine Dämpfungsanordnung umfasst, die beispielsweise das Spiel in der Klinkenanlenkung nutzt. Ferner kann die Hilfsnase aus einem besonders widerstandsfähigen und gleichwohl leisen Kunststoff ausgebildet sein. Eine Dämpfungsanordnung kann gebildet sein durch ein Dämpfungsglied, beispielsweise aus einem Elastomerwerkstoff, das in der Klinkenanlenkung angeordnet ist und einen Spalt auskleidet, so dass das Dämpfungsglied Geräusche und Vibrationen dämpft. Insbesondere kann das Dämpfungsglied als verdickter Abschnitt einer Buchse beispielsweise aus Teflon ausgebildet sein, der den Spalt auskleidet.

Vorzugsweise erfolgt die Vorspannung der Hilfsnase und der Eingriffsnase durch ein gemeinsames Federglied, so dass die Hilfsnase keine eigene Vorspanneinrichtung gegenüber der Eingriffsnase erfordert, wie dies der Fall wäre, wenn die Hilfsnase selbsttätig vorgespannt wäre. Durch die Hebelverhältnisse ist die wirksame Kraft an der Eingriffsnase größer als an der Hilfsnase, so dass die endgültige Feststellung der Feststellanordnung durch die Eingriffsnase erfolgt.

Die Eingriffsnase weist gemäß einer ersten Ausgestaltung einen in Richtung auf die Verzahnung vorstehenden Zahn auf, der bei Einrücken in die Verzahnung im Wesentlichen formschlüssig zwischen zwei benachbarte Zähne bzw. deren einander zugekehrten Zahnflanken eingerückt wird. Es ist möglich, die Eingriffsnase auch als kleines Zahnsegment auszubilden, insbesondere als Segment aus zwei Zähnen, wodurch die Haltesicherheit an der Verzahnung weiter erhöht wird, indem nämlich auch derjenige Zahn der Verzahnung, der zwischen die benachbarten Zähne der als Doppelzahn ausgebildeten Eingriffsnase eindringt, zuverlässig formschlüssig gefasst ist.

Zweckmäßigerweise verläuft die Verzahnung entlang des Umfangs eines Kreises, und bildet damit einen Zahnkamm, der kreisförmig um die Hauptachse verläuft. Hierdurch kann durch einfache Verschwenkung um eine einzige Achse die Klinkenanlenkung wirksam um einen konstanten Radius, der konzentrisch zu dem Umfang der Verzahnung ist, verschwenkt werden. Es ist aber möglich, die Verzahnung an die jeweils ausgewählte Schwenkkurve anzupassen, beispielsweise dann, wenn die Klinke entlang einer Kurve verlagert wird, wie sie beispielsweise durch ein Viergelenkanordnung erzielt wird.

Zweckmäßigerweise ist die Verzahnung an einem feststehenden Teil einer Feststellbremse angeordnet, insbesondere kann die Verzahnung als Zahnsegment, das an dem feststehenden Teil festgelegt ist, ausgebildet sein. Hierdurch kann das feststehende Teil kostengünstig hergestellt sein, während die besonders verschleißfeste Verzahnung als Zahnsegment, beispielsweise als Hartmetall-Sinterteil, ausgebildet und an dem feststehenden Teil gehaltert sein kann. Es ist aber auch möglich, die Verzahnung an einem bewegten Teil festzulegen, wobei dann vorzugsweise die Klinkenanlenkung relativ zu der bewegten Verzahnung feststehend gewählt ist.

Gemäß einer ersten bevorzugten Verwendung ist die Feststellanordnung zum Festlegen eines Bremsbetätigungshebels an einem Hebelhalter einer Feststellbremse ausgebildet, wobei dann beispielsweise die Verzahnung an dem Hebelhalter und die Klinke an dem Bremsbetätigungshebel festgelegt ist, wobei der Bremsbetätigungshebel um die Hauptachse und die Verzahnung herum verschwenkbar ausgebildet ist, so dass bei Beendigung der Anzugsbewegung des Bremsbetätigungshebels die Eingriffsnase der Klinke den Bremsbetätigungshebel gegen die Verzahnung des Hebelhalters verriegelt. Eine zweite bevorzugte Verwendung beteht darin, dass ein entgegen der Abgangsrichtung eines Bremseils vorgespanntes Bremsenteil eine Bremsseilnachstelleinrichtung bildet, und mit einer Verzahnung ausgestattet ist, die durch eine Klinke fixiert wird, wenn die Bremse durch den Bremsbetätigungshebel betätigt wird, um zu verhindern, dass die Bremsseilnachstelleinrichtung nachgibt. Hier kann die Klinke die Bremsseilnachstelleinrichtung mit einem Bremsbetätigungshebel verbinden, so dass diese gemeinsam angezogen werden können. Der Bremsbetätigungshebel kann wahlweise als Handgriff für eine Handfestellbremse oder als Pedal für eine Fussfeststellbremse ausgebildet sein.

Eine erfindungsgemäße Feststellbremse zeichnet sich durch eine erfindungsgemäße Feststellanordnung aus und weist einen Bremsbetätigungshebel auf, der schwenkbar an einem Hebelhalter angeordnet ist. Ist die Verzahnung mit einer Mehrzahl benachbarter Zähne an dem Hebelhalter angeordnet, so ist die Klinke mit der gegen die Verzahnung vorgespannten Eingriffsnase an dem Bremsbetätigungshebel schwenkbar festgelegt, wobei der Bremsbetätigungshebel durch die in die Verzahnung eingreifende Eingriffsnase verriegelbar ist. Um die Verriegelung zu lösen, ist eine Löseeinrichtung erforderlich, mittels derer die Klinke bzw. die Eingriffnase aus der Verzahnung abgehoben werden kann, die bei einer Handfeststellbremse in der Regel als Druckknopf an dem Handgriff und bei einer Fussfeststellbremse in der Regel als manuell betätigbarer Griff ausgebildet ist. Die Klinke weist in diesem Fall die Hilfsnase auf, die, bezogen auf die Verzahnung, der Eingriffsnase um ein Vielfaches der Zahnbreite der Verzahnung in Bremsrichtung versetzt angeordnet ist, und so eine Hilfslagerstelle ermöglicht.

Die Klinke ist zweckmäßigerweise durch eine Federeinheit in Einrückrichtung vorgespannt, wobei die Federeinheit zugleich die Löseeinrichtung entgegen ihrer Betätigungsrichtung vorspannen kann. Die Löseeinrichtung kann dann vorteilhaft die Klinke gegen die Vorspannung der Federeinheit, die ein versehentliches Betätigen ausschließt, außer Eingriff verschwenken.

Die Klinkenanlenkung ist zweckmäßigerweise an dem Bremsbetätigungshebel vorgesehen, und der Bremsbetätigungshebel verschwenkt beim Anziehen die Klinkenanlenkung um einen zumindest annähernd konstanten Abstand zu der Verzahnung um diese herum, um möglichst gleichmäßige Kräfte und ununterbrochene Verriegelungspositionen zu gewährleisten.

Weitere Vorteile, Weiterbildungen und Eigenschaften der Erfindung ergeben sich aus der nachfolgenden Beschreibung sowie aus den anhängigen Ansprüchen.

Die Erfindung wird nachstehend unter Bezugnahme auf die anliegenden Zeichnungen anhand eines bevorzugten Ausführungsbeispiels näher erläutert.
- Fig. 1: zeigt eine vergrößerte Darstellung einer mit Zähnen einer Verzahnung in Eingriff gelangenden Eingriffsnase, die sich in einer metastabilen Position befindet.
- Fig. 2: zeigt einen vergrößerten Ausschnitt einer als Handbremse ausgebildeten Feststellbremse.
- Fig. 3: zeigt einen weiteren Ausschnitt der Feststellbremse aus Fig. 2 in einer festgelegten Position.

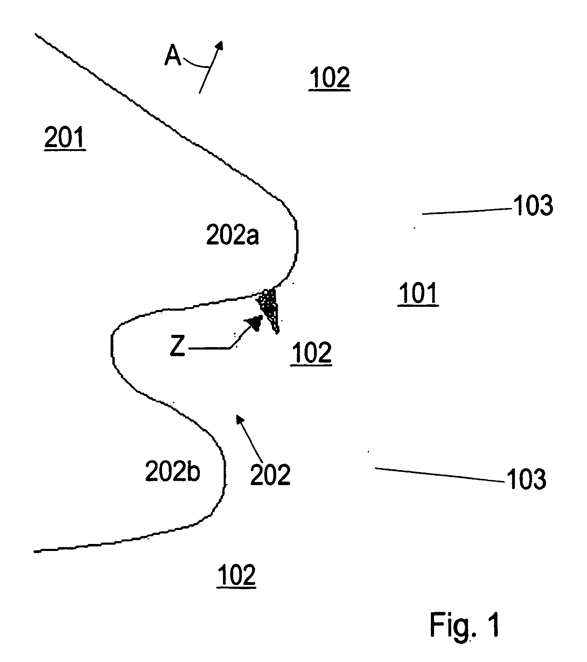

In Fig. 1 ist der Fall des Eintretens eines "Half-Locking" erläutert, bei dem die Eingriffsnase einer Feststellklinke nur eine metastabile Position in Bezug auf eine Verzahnung einnimmt und die Gefahr eines Abrutschens in Folge einer Erschütterung besteht. Die Verzahnung 101 weist mehrere Zähne 102 auf und weist einen in etwa kreissegmentartigen Verlauf auf, wobei zwischen benachbarten Zähnen 102 eine Zahnvertiefung 103 vorgesehen ist. Eine Klinke 201 wird beim Anziehen der Feststellbremse in Richtung des Pfeils A verschwenkt, bis der Bremsbetätigungshebel abgelegt wird. Die Klinke 201 weist in dem dargestellten Ausführungsbeispiel eine als Doppelzahn ausgebildete Eingriffsnase 202 auf, mit einem oberen Zahn 202a und einem unteren Zahn 202b. Um eine zuverlässige Verriegelung zu erreichen, wird erwartet, dass die Eingriffsnase 202 mit ihren Zähnen 202a, 202b jeweils in die Vertiefungen 103 zwischen benachbarten Zähnen 102 der Verzahnung 101 eindringt. Dann ist die Feststellbremse zuverlässig arretiert. In der in Fig. 1 dargestellten Kontaktposition, bei der die Tangenten an den Flanken der beteiligten Zähne 102, 202a in etwa parallel ausgebildet sind, wird keine wirksame Kraftkomponente in Richtung auf die benachbarte Vertiefung 103 erreicht, mit der Folge, dass der Zahn 202a an der Kontaktstelle in einer metastabilen Position auf der Zahnflanke des Zahns 102 aufliegt. Diese Zone Z, die als Segment des Radius des Zahns 102 eingezeichnet ist, ist im Prinzip an jedem Zahn in dem entsprechenden Teil des Schwenkweges der Klinke 201 möglich und gefährdet die Sicherheit der Passagiere von mit entsprechenden Feststellbremsen ausgestatteten Fahrzeugen. Die Anfangs- und Endpunkte der Zone Z, die in Fig. 1 gezeigt sind, entsprechen einem Winkelbereich von ca. 13,5°, wobei dieser Winkel als Schwenkwinkel um die Hauptachse ausgedrückt ist. Dies bedeutet, dass für die Eingriffsnase bei jedem Zahn 102 vermieden werden sollte, im Bereich dieser ca. 13,5° in Kontakt zu gelangen.

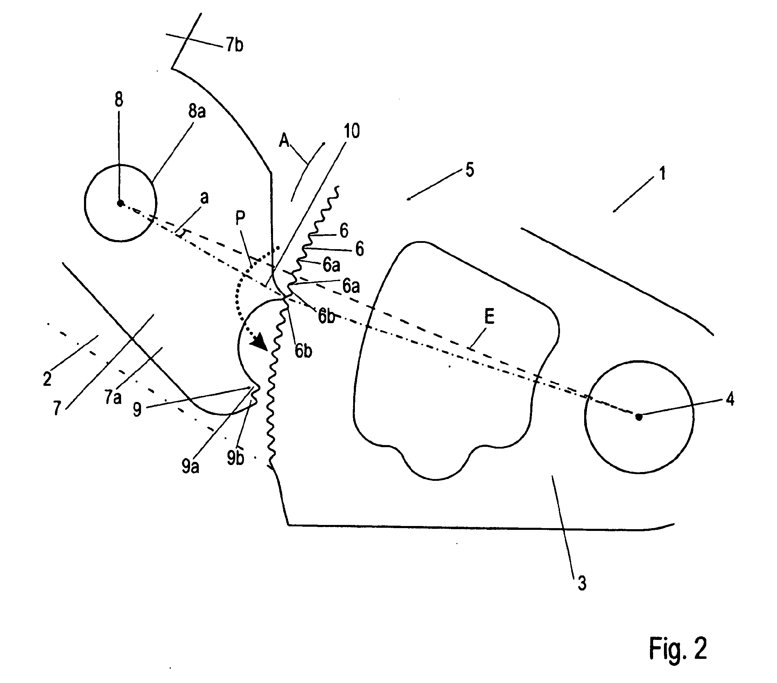

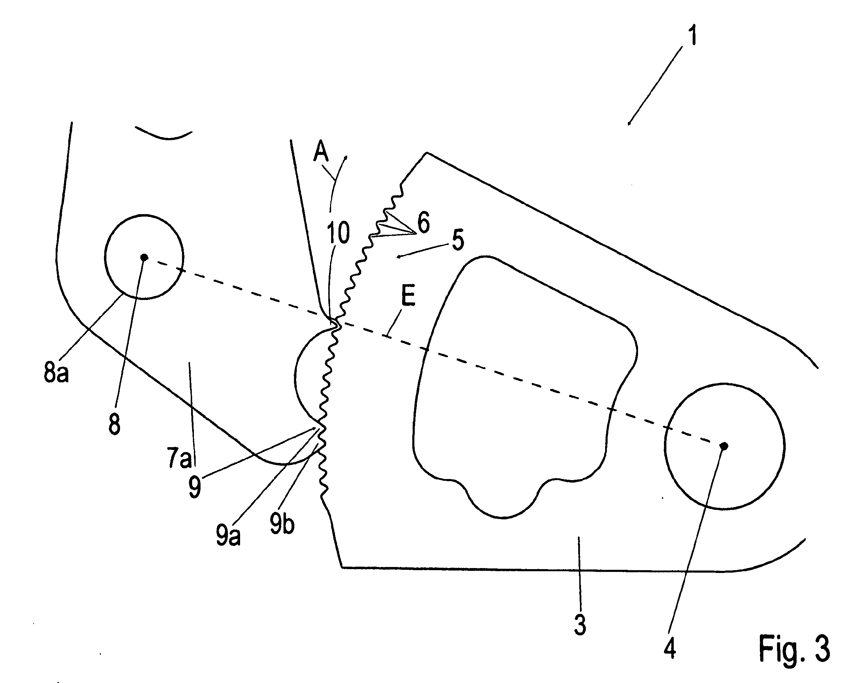

Fig. 2 und 3 zeigen ein bevorzugtes Ausführungsbeispiel einer erfindungsgemäßen Feststellbremse 1, die als Handfeststellbremse ausgebildet ist und die einen nur ausschnittsweise gezeigten Bremsbetätigungshebel 2 aufweist, der um einen mit der Karosserie verbundenen Hebelhalter 3 in einer Hauptachse 4 verschwenkbar angelenkt ist. Die Anlenkung in der Hauptachse 4 ist in üblicher Weise als Lagerstelle für den Bremsbetätigungshebel ausgebildet.

An dem Hebelhalter 3 ist eine Verzahnung 5 auf einem Kreissegment mit konstantem Radius um die Hauptachse 4 angeordnet, bei dem die Zahnteilung beispielsweise so gewählt ist, dass jeder Zahn 1° Schwenkwinkel des Bremsbetätigungshebels ausmacht, so dass die Teilung der Verzahnung 1 Zahn/Winkelgrad ausmacht. Zwischen benachbarten Zähnen 6 der Verzahnung 5 ist jeweils eine Vertiefung 6a ausgebildet, die in etwa mittig zwischen den Kämmen 6b der Zähne 6 vorgesehen ist. In der gezeigten Ausführung ist die Verzahnung 5 einstückig mit dem Hebelhalter 3 ausgebildet, es ist aber möglich, ein Zahnsegment hierfür vorzusehen, das an dem Hebelhalter 3 festgelegt, beispielsweise verstemmt, wird.

An dem Bremsbetätigungshebel 2 ist eine Klinke 7 schwenkbar um eine Klinkenachse 8 gelagert, wobei die Lagerstelle als vernieteter Zapfen ausgebildet ist, der eine entsprechende Bohrung 8a der Klinke durchsetzt und bei dem die Drehbeweglichkeit durch eine in der Bohrung 8a angeordnete Buchse aus Teflon gewährleistet ist.

Die Klinke 7 weist im Wesentlichen zwei Hebelarme 7a und 7b auf, wobei der erste Hebelarm 7a eine Eingriffsnase 9 und eine Hilfsnase 10 umfasst, und der zweite Hebel 7b ein Widerlager für eine in einem Handgriff geführte Druckstange aufweist, so dass die Druckstange den zweiten Hebel 7b bei Betätigung einer entsprechenden Löseeinrichtung nach hinten stoßen kann, damit die Eingriffsnase 9 außer Eingriff mit der Verzahnung 5 gelangt. Hierfür muss der Bremsbetätigungshebel zuvor kurz angehoben worden sein. Die Klinke 7 ist durch eine Feder relativ zu dem Bremsbetätigungshebel 2 in Richtung auf die Verzahnung 5 vorgespannt, so dass bei nicht betätigter Löseeinrichtung die Klinke 7 unter der Vorspannung der Feder in Einrückrichtung auf die Verzahnung 5 gedrückt ist.

Fig. 2 zeigt eine Position der Feststellbremse im Zuge des Feststellens des Bremsbetätigungshebels 2. Man erkennt, dass beim Anziehen des Bremsbetätigungshebels 2 in Feststellrichtung A die Hilfsnase 10, die näher an der Klinkenachse 8 angeordnet ist als die Eingriffsnase 9, über die Zähne 6 der Verzahnung 5 gezogen wird und hierbei unter Überwindung der Vorspannung der Feder die charakteristische Ratterbewegung erzeugt. Wird die Anzugsbewegung A beendet, gelangt damit der Hilfszahn 10 als erstes in Kontakt mit der Verzahnung 5, wobei dies wahlweise in einer metastabilen Half-locking-Zone erfolgt, oder aber in einem Bereich, der zu einem stabilen Einrücken des Hilfszahns 10 in einem Tal 6b zwischen zwei benachbarten Zähnen 6 führt. In beiden Fällen, also einer stabilen Kontaktposition ebenso wie einer metastabilen Kontaktposition, bewirkt die Vorspannung der Feder, die die Klinke 7 in Richtung auf die Verzahnung 5 drückt, dass die Eingriffsnase 9 weiter in Richtung auf die Verzahnung geschwenkt wird. Die Kontaktstelle zwischen der Hilfsnase 10 und der Verzahnung 5 definiert hierbei eine Hilfslagerstelle, die dazu führt, dass die Verschwenkung der Eingriffsnase 9 nicht lediglich um die Klinkenachse 8 erfolgt, sondern zugleich auch ein Verschwenken um die Hilfslagerstelle, wie mit dem Pfeil P andeutet. Hierbei wird ein Spiel in der Klinkenanlenkung 8a genutzt, das verhindert, dass die Klinke 7 in der der Hilfslagerstelle entsprechenden Stellung blockiert. Das Spiel ermöglicht ein Nachgeben der Klinkenanlenkung 8a, so dass die Eingriffsnase 9 auch bei anliegender Hilfsnase 10 stets in die Verzahnung 5 eingerückt werden kann.

Die Eingriffsnase 9 ist als Doppelzahn-Eingriffsnase ausgebildet, wobei die eigentliche Eingriffsnase durch den oberen Eingriffszahn 9a gebildet ist, während der zweite Eingriffszahn 9b im Wesentlichen dazu dient, den den Eingriffszahn 9a abstützenden Zahn 6 der Verzahnung 5 zu hintergreifen. Es ist aber auch möglich, dass die Verriegelung primär durch den zweiten Eingriffszahn 9b erfolgt. Der Zahnkamm der Hilfsnase 10 bzw. der Eingriffszähne 9a, 9b der Eingriffsnase 9 ist, bezogen auf den Verlauf der Verzahnung 5, um ein 7 ¼ Zahnbreite der Verzahnung 5 beabstandet, was bei einer Teilung von 1 Zahn/Winkelgrad 7,25° entspricht. Hierbei ist die Eingriffsnase 10 schmaler als die Zähne 9a, 9b der Hilfsnase 9 ausgebildet, so dass die Hilfsnase 10 bei sattem Sitz der Eingriffsnase 9 trotz des nicht ganzzahligen Abstandes, bezogen auf die Teilung der Verzahnung 5, nicht verklemmt, vielmehr wird die schmaler ausgebildete Hilfsnase 10 ein Stück weit aus der Vertiefung 6b hinaus gedrückt, ohne das dies die sichere Verriegelung der Feststellbremse 1 durch die in der Verzahnung 5 arretierte Eingriffsnase 9 beeinträchtigt.

Befindet sich die Eingriffsnase 10 sicher in der Vertiefung 6b der Verzahnung 5, so bewirkt die Vorspannung der Feder das weitere Einschwenken der Klinke 9 um die Hilfslagerstelle, die die Eingriffsnase 10 bildet, herum, wobei aufgrund der Nähe dieser Hilfslagerstellen zu der Verbindungsebene zwischen den zueinander parallel verlaufenden Hauptachse 4 und Klinkenachse 8, die durch eine gestrichelte Linie E angedeutet ist, erreicht wird, dass die Hilfslagerstelle diese Verbindungsebene E durchschwenkt und damit im Wesentlichen kraftlos gestellt ist. Hierdurch wird ein Verklemmen oder Verkanten wirksam vermieden. Hierzu ist es zweckmäßig, dass bei der Anzugsbewegung der Feststellbremse in Richtung des Pfeils A die Hilfsnase 10 nahe der Verbindungsebene E angeordnet ist, vorzugsweise nicht weiter als zwei Zahnbreiten entfernt, und insbesondere der Öffnungswinkel a der Verbindungslinie zwischen der Hauptachse 4 und Hilfslagerstelle möglichst kleiner oder gleich dem dreifachen Wert der Zahnbreite, voliegend also 3°, ist. Die Eingriffsnase 9 wird auf jeden Fall außerhalb einer Half-Locking-Zone in die Verzahnung 5 geschwenkt und erreicht damit zuverlässig und reproduzierbar eine stabile Eingriffsposition.

Liegt die Hilfsnase 10 im Bereich einer Half-Locking-Zone auf der Verzahnung 5 in einer metastabilen Position auf, schwenkt die Klinke 7 um die durch die Hilfsnase 10 gebildete Hilfslagerstelle. Durch den voreingestellten nicht ganzzahligen Abstand der Hilfsnase 10 zu der Eingriffsnase 9 ist sichergestellt, dass die Eingriffsnase 9 in keinem Fall eine metastabile Anlageposition an der Verzahnung 5 erreicht, und dadurch sicher in eine Vertiefung 6b eindringt.

Die Anfangs- und Endpunkte der Zone Z, die in Fig. 1 gezeigt sind, sind um einen Winkelbereich von ca. 13,5° voneinander beabstandet, wobei dieser Winkel als Schwenkwinkel um die Hauptachse 4 ausgedrückt ist. Durch die Auswahl eines Abstandes zwischen Eingriffsnase 9 und Hilfsnase 11, der zu einem ganzzahligen in Zahnbreiten gemessenen Abstand noch einen Bruchteil hinzufügt, der größer als der besagte Zonenwinkel ist und von dem ganzzahligen Vielfachen einen entsprechenden Abstand aufweist, ist sichergestellt, dass nicht gleichzeitig die Hilfsnase 10 und die Eingriffsnase 9 in eine metastabile Position gelangen können. Bei einem Zonenwinkel von maximal 15 % kann der zu dem ganzzahligen Abstand hinzuzuaddierende Bruchteil einer Zahnbreite zwischen 15 und 85 % der Zahnbreite betragen, wobei aus Gründen der Sicherheit ein Abstand von wenigstens 20 % einer vollen Zahnbreite eingehalten werden soll. Zwar bietet ein Bruchteil von ½ den maximalen Abstand zu den Problemzonen, jedoch würde dann der Kamm der Hilfsnase 10 mit dem Kamm 6a eines Zahns 6 der Verzahnung 5 zusammenfallen, was möglichst vermieden werden soll, weshalb der Bruchteil nahe den Grenzwerten von +¼ oder - ¼ gewählt ist.

Die Erfindung funktioniert nun wie folgt:
Ausgehend von einer abgelegten Position des Bremsbetätigungshebels 2 wird dieser in Anzugsrichtung A verlagert. Hierbei gelangt zunächst der Hilfszahn 10 in Kontakt mit der Verzahnung 5, und wird dabei unter zahnweiser Überwindung der Vorspannung der Klinke 7 über die Zähne 6 gezogen. Aufgrund des größeren Abstands der Eingriffsnase 9 zu der Klinkenachse 8 im Vergleich zu der Hilfsnase 10 gelangt die Eingriffsnase 9 vollständig außer Eingriff mit der Verzahnung 5. Wird die Anzugsbewegung A gestoppt, gelangt die Hilfsnase 10 als erstes in Kontakt mit der Verzahnung 5 und bildet durch Aufliegen eine Hilfslagerstelle an ihrem Kontaktpunkt mit der Verzahnung 5, um die die Eingriffsnase 9 in Richtung auf die Verzahnung 5 unter der Vorspannung der die Klinke 7 beaufschlagenden Feder verschwenkt wird. Die Eingriffsnase 9 gelangt dann in satten Eingriff mit der Verzahnung 5, so dass sichergestellt ist, dass durch die Verschwenkung um die Hilfslagerstelle das Berühren einer metastabilen Zone verhindert ist. Die Eingriffsnase 9 verriegelt dann die Feststellbremse 1.

Soll die Feststellbremse 1 wieder abgelegt werden, wird eine Löseeinrichtung betätigt, die eine Druckstange gegen eine dieser zugekehrten Fläche des Hebelarms 7b drückt, und diesen gegen die Vorspannung der die Klinke 7 beaufschlagenden Feder um die Klinkenachse 8 verschwenkt. Damit gelangt aufgrund des voreingestellten Weges der Druckstange sowohl die Eingriffsnase 9 als auch die Hilfsnase 10 soweit außer Eingriff mit der Verzahnung 5, dass keine der beiden Nasen 9, 10 die Ablage des Bremsbetätigungshebels 2 behindert. Der Bremsbetätigungshebel 2 kann dann wieder bis in seine abgelegte Position herabverschwenkt werden. In der abgelegten Position ist die Eingriffsnase 9 in einem Ablagebereich unmittelbar vor der Verzahnung 5 abgelegt, während die Hilfsnase 10 bereits um den Betrag ihres Abstands zu der Eingriffsnase in die Verzahnung 5 vorsteht. Ausgehend von dieser Position kann die Feststellbremse 1 wieder in Anzugrichtung A angezogen werden.

Es versteht sich, dass auch bei einem Ablegen des Bremsbetätigungshebels 2 vor Erreichen der vollständig abgelegten Position die Schwenkbewegung um die an der Kontaktstelle der Hilfsnase 10 mit der Verzahnung 5 gebildete Hilfslagerstelle erfolgt, so dass nicht nur in Anzugsrichtung eine zuverlässige Festlegung der Feststellbremse 1 gegeben ist, sondern auch dann, wenn ausgehend von einem stärker angezogenen Zustand des Bremsbetätigungshebels 2 dieser ein Stück weit in eine weniger angezogene Stellung verlagert werden soll, der aber noch nicht die Ablageposition darstellt.

Die Erfindung ist vorstehend anhand eines Ausführungsbeispiels erläutert worden, bei dem die Hilfsnase 10 um eine Viertelzahn-Breite von einem ganzzahligen Abstand, gemessen in Zahnbreiten, von der Eingriffsnase 9 beabstandet ist. Es versteht sich, das auch andere nicht ganzzahlige Abstände in Betracht kommen, wobei der Winkelbereich der Half-Locking-Zone Z hierbei ausgenommen ist.

Die Erfindung ist vorstehend anhand eines Ausführungsbeispiels erläutert worden, bei dem die Eingriffsnase 9 zwei Zähne 9a, 9b umfasst. Es versteht sich, dass die Eingriffsnase auch mit nur einem Zahn, oder mit mehr als zwei Zähnen ausgebildet sein kann.

## Patentansprüche

1. Feststellanordnung zur Verriegelung eines unter Spannung gehaltenen Bremsenteils, umfassend
eine Verzahnung (5) mit einer Mehrzahl benachbarter Zähne (6),
eine um eine Klinkenanlenkung (8) verschwenkbare Klinke (7), die an einem Eingriffsende wenigstens eine in Richtung auf die Verzahnung (5) vorgespannte Eingriffsnase (9) aufweist,
wobei eines von Klinkenanlenkung (8) und Verzahnung (5) relativ zueinander um eine Hauptachse (4) verschwenkbar ist,
wobei der Klinke (7) beabstandet von der Eingriffsnase (9) eine Hilfsnase (10) zugeordnet ist, und
wobei die Hilfsnase (10) derart angeordnet ist, dass sie vor der Eingriffsnase (9) mit der Verzahnung (5) in Kontakt bringbar ist **dadurch gekennzeichnet,**
**dass** die Hilfsnase (10) bei Anlage an der Verzahnung (5) eine Hilfslagerstelle bildet, und
**dass** die Eingriffsnase (9) um die Hilfslagerstelle schwenkbar ist.

2. Feststellanordnung nach Anspruch 1, **dadurch gekennzeichnet, dass** die Hilfsnase (10) näher an einer die Klinkenanlenkung (8) und die Hauptachse (4) verbindenden Ebene (E) angeordnet ist als die Eingriffsnase (9).

3. Feststellanordnung nach Anspruch 1 oder 2, **dadurch gekennzeichnet, dass** die Hilfsnase (10) in Feststellrichtung um zumindest zwei Zähne der Verzahnung (5) gegenüber der Eingriffsnase (9) vorlaufend angeordnet ist.

4. Feststellanordnung nach einem der Ansprüche 1 bis 3, **dadurch gekennzeichnet, dass** der Abstand der Scheitel der Hilfsnase (10) und der Eingriffsnase (9) ein nicht ganzzahliges Vielfaches der Zahnbreite eines Zahns (6) der Verzahnung (5) ausmacht, und dass der Abstand vorzugsweise von einem ganzzahligen Vielfachen eine Viertel Zahnbreite beabstandet ist.

5. Feststellanordnung nach einem der Ansprüche 1 bis 4, **dadurch gekennzeichnet, dass** die Hilfsnase (10) schmaler ausgebildet ist als die Eingriffsnase (9).

6. Feststellanordnung nach einem der Ansprüche 1 bis 5, **dadurch gekennzeichnet, dass** die Hilfsnase (10) an der Klinke (7) angeordnet ist, und dass die Klinke (7) in Richtung auf die Verzahnung (5) vorgespannt ist.

7. Feststellanordnung nach einem der Ansprüche 1 bis 6, **dadurch gekennzeichnet, dass** die Klinkenanlenkung (8) mit Spiel ausgestattet ist.

8. Feststellanordnung nach einem der Ansprüche 1 bis 7, **dadurch gekennzeichnet, dass** die Hilfsnase (10) in der Art eines Eingriffszahns ausgebildet ist.

9. Feststellanordnung nach einem der Ansprüche 1 bis 8, **dadurch gekennzeichnet, dass** die Hilfsnase (10) näher an der Klinkenanlenkung (8) angeordnet ist als die Eingriffsnase (9), dass die Vorspannung der Hilfsnase (10) und der Eingriffsnase (9) von demselben Federglied erfolgt, und dass die wirksame Kraft an der Eingriffsnase (9) größer ist als an der Hilfsnase (10).

10. Feststellanordnung nach einem der Ansprüche 1 bis 9, **dadurch gekennzeichnet, dass** die Eingriffsnase (9) in der Art eines Doppelzahns ausgebildet ist.

11. Feststellanordnung nach einem der Ansprüche 1 bis 10, **dadurch gekennzeichnet, dass** die Verzahnung (5) entlang des Umfangs eines Kreises verläuft, und dass die Verzahnung (5) an einem feststehenden Teil (3) einer Feststellbremse (1) angeordnet ist.

12. Verwendung der Feststellanordnung nach einem der Ansprüche 1 bis 11 zum Festlegen eines Bremsbetätigungshebels (2) an einem Hebelhalter (3) einer Feststellbremse (1).

13. Verwendung der Feststellanordnung nach einem der Ansprüche 1 bis 11 zum Festlegen einer Bremsseilnachstelleinrichtung an einen Bremsbetätigungshebel (2) einer Feststellbremse (1).

14. Feststellbremse für ein Kraftfahrzeug, umfassend einen Bremsbetätigungshebel (2), der schwenkbar an einem Hebelhalter (3) angelenkt ist, **gekennzeichnet durch** eine Feststellanordnung nach einem der Ansprüche 1 bis 11.

15. Feststellbremse nach Anspruch 14 für ein Kraftfahrzeug,
**dadurch gekennzeichnet, dass** der Bremsbetätigungshebel (2) schwenkbar an einem Hebelhalter (3) angelenkt ist, wobei der Bremsbetätigungshebel (2) durch Eingriff der Eingriffsnase (9) in die Verzahnung (5) in einer angehobenen Stellung verriegelbar ist,
wobei eine Löseeinrichtung, mittels derer die Eingriffsnase (9) aus der Verzahnung (5) abhebbar ist, vorgesehen ist,
wobei die Hilfsnase (10) in Bezug auf die Verzahnung (5) gegenüber der Eingriffsnase (9) um einen nicht ganzzahligen Bruchteil einer Zahnbreite der Verzahnung (5), der größer als zwei ist, in Anzugsrichtung (A) des Bremsbetätigungshebels (2) versetzt angeordnet ist.

16. Feststellbremse nach Anspruch 14 oder 15, **dadurch gekennzeichnet, dass** der Bremsbetätigungshebel (2) als Handbremshebel ausgebildet ist.

17. Feststellbremse nach einem der Ansprüche 14 bis 16, **dadurch gekennzeichnet, dass** die Klinke (7) durch eine Federeinheit in Einrückrichtung vorgespannt ist, und dass eine Lösereinrichtung vorgesehen ist, die die Klinke (7) gegen die Vorspannung der Federeinheit außer Eingriff mit der Verzahnung (5) verschwenkt.

18. Feststellbremse nach einem der Ansprüche 14 bis 17, **dadurch gekennzeichnet, dass** die Klinkenanlenkung (8) an dem Bremsbetätigungshebel (2) vorgesehen ist und in einem zumindest annähernd konstanten Abstand zu der Verzahnung (5) um die Anlenkung (4) des Bremsbetätigungshebels (2) verschwenkbar ist.

## Claims

1. Locking arrangement for locking a brake part held under tension, comprising
a tooth system (5) having a plurality of adjacent teeth (6),
a catch (7) which can be pivoted about a catch coupling (8) and which has at least one engaging nose (9) that is biased in the direction toward the tooth system (5) at an engagement end,
wherein either the catch coupling (8) or the tooth system (5) can be pivoted relative to the other about a main axis (4),
wherein the catch (7) is assigned an auxiliary nose (10) at a distance from the engaging nose (9), and
wherein the auxiliary nose (10) is disposed in such a way that it can be brought into contact with the tooth system (5) before the engaging nose (9),
**characterized in**
**that** the auxiliary nose (10) forms an auxiliary bearing location when it enters the tooth system (5), and
**that** the engaging nose (9) is rotatable about the auxiliary bearing location.

2. Locking arrangement as claimed in claim 1, **characterized in that** the auxiliary nose (10) is disposed closer to a plane (E) connecting the catch coupling (8) and the main axis (4) than the engaging nose (9).

3. Locking arrangement as claimed in claim 1 or 2, **characterized in that** the auxiliary nose (10) is disposed ahead of the engaging nose (9) by at least two teeth of the tooth system (5) in the locking direction.

4. Locking arrangement as claimed in one of claims 1 to 3, **characterized in that** the distance between the apexes of the auxiliary nose (10) and of the engaging nose (9) is a non-integral multiple of the tooth width of one tooth (6) of the tooth system (5), and that the distance is preferably distanced by a one quarter tooth width from an integral multiple.

5. Locking arrangement as claimed in one of claims 1 to 4, **characterized in that** the auxiliary nose (10) is configured narrower than the engaging nose (9).

6. Locking arrangement as claimed in one of claims 1 to 5, **characterized in that** the auxiliary nose (10) is disposed on the catch (7), and that the catch (7) is biased in a direction toward the tooth system (5).

7. Locking arrangement as claimed in one of claims 1 to 6, **characterized in that** the catch coupling (8) is provided with play.

8. Locking arrangement as claimed in one of claims 1 to 7, **characterized in that** the auxiliary nose (10) is in the form of an engaging tooth.

9. Locking arrangement as claimed in one of claims 1 to 8, **characterized in that** the auxiliary nose (10) is disposed closer to the catch coupling (8) than the engaging nose (9), that the biasing of the auxiliary nose (10) and of the engaging nose (9) is performed by the same spring member, and that the effective force on the engaging nose (9) is greater than on the auxiliary nose (10).

10. Locking arrangement as claimed in one of claims 1 to 9, **characterized in that** the engaging nose (9) is configured as a double tooth.

11. Locking arrangement as claimed in one of claims 1 to 10, **characterized in that** the tooth system (5) extends along the circumference of a circle, and that the tooth system (5) is disposed on a fixed part (3) of a parking brake (1).

12. Use of the locking arrangement as claimed in one of claims 1 to 11 for fixing a brake actuating lever (2) on a lever holder (3) of a parking brake (1).

13. Use of the locking arrangement as claimed in one of claims 1 to 11 for fixing a brake cable adjustment device on a brake actuating lever (2) of a parking brake (1).

14. Parking brake for a motor vehicle, comprising a brake actuating lever (2) which is pivotably coupled to a lever holder (3), **characterized by** a locking arrangement as claimed in one of claims 1 to 11.

15. Parking brake as claimed in claim 14 for a motor vehicle, **characterized in that** the brake actuating lever (2) is pivotably coupled to a lever holder (3), wherein the brake actuating lever (2) can be locked in a raised position by engagement of the engaging nose (9) in the tooth system (5), wherein a release device is provided by means of which the engaging nose (9) can be raised out of the tooth system (5),
wherein the auxiliary nose (10), with respect to the tooth system (5), is disposed offset the engaging nose (9) in a direction (A) of application of the brake actuating lever (2) by a non-integral fraction, of a tooth width of the tooth system (5), the fraction being greater than two.

16. The parking brake as claimed in claim 14 or 15, **characterized in that** the brake actuating lever (2) is designed as a handbrake lever.

17. The parking brake as claimed in one of claims 14 to 16, **characterized in that** the catch (7) is biased in the direction of engagement by a spring unit" and that a release device is provided which pivots the catch (7) out of engagement with the tooth system (5) against the bias of the spring unit.

18. The parking brake as claimed in one of claims 14 to 17, **characterized in that** the catch coupling (8) is provided on the brake actuating lever (2) and can be pivoted about the coupling (4) of the brake actuating lever (2) at an at least approximately constant distance from the tooth system (5).

## Revendications

1. Dispositif de blocage destiné à verrouiller une pièce de freinage maintenue sous tension, ledit dispositif comportant
une denture (5) comportant une pluralité de dents adjacentes (6),
un cliquet (7), apte à pivoter autour d'une articulation de cliquet (8), qui comporte à une extrémité d'engagement au moins un ergot d'engagement (9) précontraint en direction de la denture (5),
l'un parmi l'articulation de cliquet (8) et la denture (5) étant apte à pivoter l'un par rapport à l'autre autour d'un axe principal (4),
un ergot auxiliaire (10) étant associé au cliquet (7) à distance de l'ergot d'engagement (9), et
l'ergot auxiliaire (10) étant disposé de telle sorte qu'il peut être amené en contact avec la denture (5) en amont de l'ergot d'engagement (9), **caractérisé en ce**
**que** l'ergot auxiliaire (10) forme un point d'appui auxiliaire lorsqu'il est placé contre la denture (5), et
**que** l'ergot d'engagement (9) est apte à pivoter autour du point d'appui auxiliaire.

2. Dispositif de blocage selon la revendication 1, **caractérisé en ce que** l'ergot auxiliaire (10) est disposé plus près d'un plan (E), reliant l'articulation de cliquet (8) et l'axe principal (4), que l'ergot d'engagement (9).

3. Dispositif de blocage selon la revendication 1 ou 2, **caractérisé en ce que** l'ergot auxiliaire (10) est disposé de manière à avancer dans le sens de blocage d'au moins deux dents de la denture (5) par rapport à l'ergot d'engagement (9).

4. Dispositif de blocage selon l'une des revendications 1 à 3, **caractérisé en ce que** la distance entre les sommets de l'ergot auxiliaire (10) et de l'ergot d'engagement (9) est un multiple non-entier de la largeur d'une dent (6) de la denture (5), et que la distance est avantageusement un multiple entier d'un quart de largeur de dent.

5. Dispositif de blocage selon l'une des revendications 1 à 4, **caractérisé en ce que** l'ergot auxiliaire (10) a une conformation plus mince que celle de l'ergot d'engagement (9).

6. Dispositif de blocage selon l'une des revendications 1 à 5, **caractérisé en ce que** l'ergot auxiliaire (10) est disposé au niveau du cliquet (7), et que le cliquet (7) est précontraint en direction de la denture (5).

7. Dispositif de blocage selon l'une des revendications 1 à 6, **caractérisé en ce que** l'articulation de cliquet (8) est dotée d'un jeu.

8. Dispositif de blocage selon l'une des revendications 1 à 7, **caractérisé en ce que** l'ergot auxiliaire (10) est conformé à la manière d'une dent d'engagement.

9. Dispositif de blocage selon l'une des revendications 1 à 8, **caractérisé en ce que** l'ergot auxiliaire (10) est disposé plus près de l'articulation de cliquet (8) que l'ergot d'engagement (9), que la précontrainte exercée sur l'ergot auxiliaire (10) et l'ergot d'engagement (9) est produite par le même élément élastique, et que la force opérante au niveau de l'ergot d'engagement (9) est supérieure à celle au niveau de l'ergot auxiliaire (10).

10. Dispositif de blocage selon l'une des revendications 1 à 9, **caractérisé en ce que** l'ergot d'engagement (9) est conformé à la manière d'une double dent.

11. Dispositif de blocage selon l'une des revendications 1 à 10, **caractérisé en ce que** la denture (5) s'étend sur la périmètre d'un cercle, et que la denture (5) est disposée au niveau d'une partie immobile (3) d'un frein de stationnement (1).

12. Utilisation du dispositif de blocage selon l'une des revendications 1 à 11 pour bloquer un levier d'actionnement de frein (2) au niveau d'un support de levier (3) d'un frein de stationnement (1).

13. Utilisation du dispositif de blocage selon l'une des revendications 1 à 11 pour bloquer un mécanisme de réglage de câble de frein au niveau d'un levier d'actionnement de frein (2) d'un frein de stationnement (1).

14. Frein de stationnement pour véhicule automobile, comportant un levier d'actionnement de frein (2) qui est articulé de façon à pouvoir pivoter au niveau d'un support de levier (3), **caractérisé par** un dispositif de blocage selon l'une des revendications 1 à 11.

15. Frein de stationnement selon la revendication 14 pour véhicule automobile, **caractérisé en ce que** le levier d'actionnement de frein (2) est articulé de façon à pouvoir pivoter au niveau d'un support de levier (3), le levier d'actionnement de frein (2) pouvant être verrouillé dans une position relevée par engagement de l'ergot d'engagement (9) dans la denture (5), un dispositif de déblocage, au moyen duquel l'ergot d'engagement (9) pouvant être retiré de la denture (5), étant prévu, l'ergot auxiliaire (10) étant disposé de façon décalé, par rapport à la denture (5), de l'ergot d'engagement (9) d'une fraction non-entière supérieure à 2 de d'une largeur de dent de la denture (5) dans une direction de serrage (A) du levier d'actionnement de frein (2).

16. Frein de stationnement selon la revendication 14 ou 15, **caractérisé en ce que** le levier d'actionnement de frein (2) est conformé en levier de frein à main.

17. Frein de stationnement selon l'une des revendications 14 à 16, **caractérisé en ce que** le cliquet (7) est précontraint par une unité élastique dans la direction d'enclenchement, et qu'un dispositif de déblocage est prévu qui fait pivoter le cliquet (7) hors engagement d'avec la denture (5) en s'opposant à la précontrainte exercée par l'unité élastique.

18. Frein de stationnement selon l'une des revendications 14 à 17, **caractérisé en ce que** l'articulation de cliquet (8) est prévue au niveau du levier d'actionnement de frein (2) et est apte à pivoter autour de l'articulation (4) du levier d'actionnement de frein (2) à une distance au moins à peu près constante par rapport à la denture (5).
